# EUROPÄISCHE PATENTSCHRIFT

(11) **EP 1 610 043 B1**
(45) Veröffentlichungstag und Bekanntmachung des Hinweises auf die Patenterteilung: **28.05.2008**
(21) Anmeldenummer: 05013585.4
(22) Anmeldetag: 23.06.2005
(51) Int. Cl.: F16K 5/06, F16K 27/06, F16K 47/08

(54) **Fluidventil**
Valve for fluid
Valve de fluid

(30) Priorität: 23.06.2004 DE 202004009840 U
(43) Veröffentlichungstag der Anmeldung: 28.12.2005
(73) Patentinhaber: "Farm & Garten-STM" Vetriebs GmbH, 72829 Engstingen-Kohlstetten (DE)
(72) Erfinder: Röthel, Manfred, 91757 Treuchtlingen (DE)
(74) Vertreter: Witzany, Manfred

(56) Entgegenhaltungen:
- DE-A1- 2 240 348
- GB-A- 2 363 184
- US-A- 3 617 027
- US-A- 4 236 691
- US-A- 4 881 718
- US-A- 5 524 863

## Beschreibung

Die Erfindung betrifft ein Fluidventil bestehend aus einem Ventilgehäuse und einem Ventilkörper gemäß dem Oberbegriff des Patentanspruchs 1.

Aus der DE-B-25 52 297 ist ein Fluidventil insbesondere zum Absperren von Hydraulik- oder Pneumatikleitungen bekannt. Dieses Fluidventil besteht aus einem Ventilgehäuse mit eingelagertem Ventilsitz und einem Ventilkörper in Form einer Kugel. Diese Kugel weist eine Durchgangsbohrung auf, die zwei Anschlüsse des Ventilgehäuses je nach Stellung des Ventilkörpers miteinander verbinden kann. Durch Verdrehen des kugelförmigen Ventilkörpers kann der Durchgangsquerschnitt allmählich bis auf null verringert werden, so daß diese Ventilart gleichzeitig als Dosierventil einsetzbar ist. Um den Ventilkörper verdrehen zu können, weist dieser eine quer zur Durchgangsbohrung verlaufende Nut auf, in die ein Zapfen eingreift. Dieser Zapfen ist mit einem Handgriff verbunden. Die Nut ermöglicht eine sichere Drehmomentübertragung vom Handgriff auf den Ventilkörper. Da die Nut durch die Drehachse des Ventilkörpers verläuft, kann diese jedoch in keiner Weise den Fluidstrom durch das Ventil regulieren.

Aus der US-A-5 524 863 ist ein gattungsgemäßes Fluidventil bekannt. Dieses Ventil ist in Form eines Kugelventils ausgebildet, welches in seinem Ventilgehäuse eine Durchgangsbohrung aufweist. Im Ventilgehäuse ist ein kugelförmiger Ventilkörper verdrehbar gehalten, der ebenfalls mit einer Durchgangsbohrung versehen ist. In eine Offenstellung dieses Kugelventils können Anschlüsse des Ventilgehäuses durch die Durchgangsbohrung des Ventilkörpers kommunizieren. Die Durchgangsbohrung des Ventilkörpers ist an beiden Endbereichen durch jeweils eine Nut in ihrem Querschnitt erweitert, um in einem erweiterten Stellwinkelbereich des Ventilkörpers eine Verbindung zwischen den Anschlüssen herzustellen. Dieses Ventil hat sich in der Praxis gut bewährt und bildet den Ausgangspunkt der vorliegenden Erfindung.

Aus der US-A-4 881 718 ist ein weiteres Fluidventil bekannt, welches im wesentlichen den gleichen Aufbau wie das vorgenannte Fluidventil aufweist. Auch dieses Fluidventil besitzt einen Ventilkörper mit einem Durchgangsbohrung, die in ihren Endbereichen durch jeweils eine Nut erweitert ist.

Der Erfindung liegt die Aufgabe zugrunde, ein Fluidventil der eingangs genannten Art zu schaffen, das sich durch eine feinfühlige Einstellbarkeit der durchströmenden Fluidmenge auszeichnet.

Diese Aufgabe wird erfindungsgemäß mit den Merkmalen des Schutzanspruchs 1 gelöst.

Das Fluidventil gemäß Anspruch 1 dient insbesondere zum Einstellen eines Fluidstroms für Hydraulik- bzw. Pneumatikmotoren eines Fahrzeugantriebs. Es besteht aus einem Ventilgehäuse und einem darin drehbar gelagerten Ventilkörper, der vorzugsweise bis auf eingearbeitete Fluidkanäle im wesentlichen rotationssymmetrisch ausgebildet ist. Vorzugsweise ist der Ventilkörper im wesentlichen kugelförmig ausgebildet. Der Ventilkörper weist eine Durchgangsbohrung auf, durch die zwei Anschlüsse des Ventilgehäuses miteinander kommunizierend verbunden werden können. Kommt diese Durchgangsbohrung mit entsprechenden Ventilsitzen innerhalb des Ventilgehäuses zur Deckung, so ergibt sich der maximal mögliche Leitungsquerschnitt für das Fluid. Das Fluidventil setzt dem Fluid in dieser Stellung den geringstmöglichen Strömungswiderstand entgegen. Aufgrund der Symmetrie dieser Ventilkörpers tritt die gleiche Situation in einer um 180° verdrehten Lage des Ventilkörpers auf. Dies ist für den bevorzugten Anwendungsfall des neuerungsgemäßen Fluidventils vorteilhaft, da auf diese Weise in beiden Extremlagen des Ventilkörpers der maximal mögliche Fluidfluß gegeben ist, während es in einer Mittellage des Ventilkörpers mit senkrecht zu den Anschlüssen sich erstreckender Durchgangsbohrung den Fluidstrom sperrt. Das Fluidventil kann auf diese Weise vorteilhaft zur Dosierung des Fluidstroms sowohl für die Vorwärts- als auch Rückwärtsfahrt eingesetzt werden. Die Durchgangsbohrung hat jedoch den Nachteil, daß der Ventilkörper den Fluidstrom in einem relativ großen Stellwinkelbereich sperrt. Dies führt beim bevorzugten Anwendungsfall, der Steuerung von Fahrzeug-Antriebsmotoren zu dem unangenehmen Effekt, daß die Fahrmotoren beim Zurückziehen des Gashebels relativ schnell blockieren, was im Fahrbetrieb einer Vollbremsung entspricht. Es hat sich herausgestellt, daß eine bloße Vergrößerung des Durchmessers der Durchgangsbohrung nicht zum gewünschten Erfolg führt, da in diesem Fall die Dosierwirkung des Fluidventils vollständig verloren ginge und das Ventil ständig offen wäre. Zur Lösung dieses Problems setzt das neuerungsgemäße Fluidventil mindestens eine zusätzliche Nut im Ventilkörper ein, die der Durchgangsbohrung zugeordnet ist. Über diese Nut kann der Stellwinkelbereich des Ventilkörpers, bei dem das Fluid zwischen den Anschlüssen fließen kann, erheblich vergrößert werden. Grundsätzlich ist es auf diese Weise möglich, den Winkelbereich, bei dem das Fluidventil vollständig sperrt, beliebig klein zu halten. Dabei fließt das Fluid bei gesperrter Durchgangsbohrung vom Ventilsitz vorzugsweise in die erste Nut und gelangt auf diese Weise in den Spaltraum zwischen dem Ventilkörper und dem Ventilgehäuse. Dabei umfließt es den Ventilkörper und gelangt auf diese Weise in die gegenüberliegende Nut, wo es den gegenüberliegenden Ventilsitz durchdringt und auf diese Weise zum gegenüberliegenden Anschluß kommt. Der relativ komplizierte Strömungsweg des Fluids ist dabei gewollt und führt zu einem erheblichen Strömungswiderstand, so daß sich beim bevorzugten Anwendungsgegenstand ein sanftes und nicht mehr abruptes Abbremsen des Fahrzeugs ergibt. Je nach Winkellage des Ventilkörpers kann auch der wirksame Nutquerschnitt in weiten Grenzen eingestellt werden, so daß sich auch im erweiterten Stellwinkelbereich des Fluidventils eine günstige und feinfühligere Einstellbarkeit des Strömungswiderstandes und damit der Strömungsmenge des Fluids erzielen läßt.

Zur Erzielung eines möglichst großen Stellwinkelbereichs mit kommunizierenden Anschlüssen ist es günstig, wenn die Nuten in etwa parallel zur Durchgangsbohrung und im Abstand zu dieser verlaufen. Die Nuten können auf diese Weise einen relativ großen Stellwinkelbereich des Ventilkörpers überbrücken, so daß auf diese Weise jener Stellwinkelbereich, in dem das Fluidventil vollständig geschlossen ist, beliebig klein oder sogar zum Verschwinden gebracht werden kann.

Gemäß Anspruch 2 ist es günstig, wenn die Nuten einen kleineren Querschnitt als die Durchgangsbohrung aufweisen. Auf diese Weise kann der Strömungswiderstand und damit die Fluidmenge in besonders weiten Grenzen eingestellt werden. In dem Stellwinkelbereich, in dem die Durchgangsbohrung die Fluidströmung übernimmt, ergibt sich bedingt durch den größeren Querschnitt der Durchgangsbohrung eine wesentlich größere Strömungsmenge als im Stellwinkelbereich, in dem die Nuten die Fluidströmung übernehmen. Damit kann die Fluidmenge in allen Bereichen besonders genau dosiert werden.

Zur Erzielung einer gutmütigen Charakteristik des Fluidventils ist es gemäß Anspruch 3 vorteilhaft, wenn sich die Stellwinkelbereiche, in denen die Anschlüsse einerseits über die Durchgangsbohrung und andererseits über die Nuten kommunizieren, überlappen. Demnach gibt es einen besonderen Stellwinkelbereich, in dem die Fluidströmung sowohl über die Durchgangsbohrung als auch über die Nuten erfolgt. Dies verhindert zuverlässig, daß im Übergangsbereich beider Stellwinkelbereiche der Strömungswiderstand in Abhängigkeit vom Stellwinkel zunimmt und anschließend wieder abnimmt, was zu einer sehr unangenehmen Stellcharakteristik des Fluidventils führen würde.

Zur Erzielung eines hohen Strömungswiderstandes im erweiterten Stellwinkelbereich und damit einer besonders feinfühligen Einstellbarkeit der Fluidmenge ist es gemäß Anspruch 4 vorteilhaft, wenn die Nuten einander gegenüberliegen. Auf diese Weise ergibt sich ein relativ komplizierter Strömungsverlauf mit vielen abrupten Richtungswechseln, was den Strömungswiderstand entsprechend erhöht.

Insbesondere im bevorzugten Anwendungsfall, der Ansteuerung von Fahrzeug-Antriebsmotoren ist ein vollständiges Blockieren des Fluidstroms und damit der Antriebsräder unerwünscht. Zur Erzielung einer günstigen Fahrcharakteristik ist es wünschenswert, wenn auch in der Neutralstellung des Ventilkörpers eine kleine Fluidmenge durch die Fahrzeug-Antriebsmotoren fließen könnte, um das Fahrzeug sanft abzubremsen. Dabei darf jedoch keinerlei Antriebskraft mehr von den Fahrzeugmotoren ausgehen. Dies wird am einfachsten gemäß Anspruch 5 dadurch erreicht, daß das Ventilgehäuse einen Ventilsitz aufweist, an den der Ventilkörper mit Spalt anliegt. Auf diese Weise wird die Leckrate des geschlossenen Fluidventils auf einen gewünschten, vordefinierten Wert eingestellt. Ist der Spalt hinreichend klein, beispielsweise wenige hundertstel mm, so fällt der gesamte Öldruck im wesentlichen an diesem Spalt ab, so daß das Fluid im wesentlichen drucklos fließen kann. Vorzugsweise ist der Ventilsitz derart ausgebildet, daß er im wesentlichen über seine gesamte Fläche vom Ventilkörper entsprechend beabstandet ist.

Alternativ ist es gemäß Anspruch 6 günstig, wenn der Ventilsitz radiale Rillen aufweist, die den Spalt bilden. Über diese radialen Rillen läßt sich der Fluidfluß und auch der damit verbundene Druckverlust sehr präzise einstellen, so daß eine nachträgliche Änderung der gewünschten Leckrate des Fluidventils durch einen Austausch des Ventilsitzes möglich ist.

Zur Erzielung des gewünschten Spaltmaßes ist es gemäß Anspruch 7 günstig, wenn der Ventilsitz von einer Dichtscheibe gebildet ist, die von einer den Anschluß bildenden Schraube gegen den Ventilkörper gedrückt ist. Auf diese Weise ergibt sich eine definierte Anpreßkraft des Ventilsitzes gegen den Ventilkörper, so daß zusammen mit dem Fluiddruck ein vordefiniertes Spaltmaß eingestellt werden kann.

Zur Erzielung eines definierten Spaltmaßes zwischen dem Ventilkörper und dem Ventilsitz ist es gemäß Anspruch 8 vorteilhaft, wenn die Schraube mit einer vorspringenden Dichtfläche einen Dichtring gegen das Ventilgehäuse preßt. Auf diese Weise ergibt sich eine definierte Lage der Schraube und damit des Ventilsitzes, so daß sich ohne weitere Maßnahmen das gewünschte Spaltmaß einstellt.

Schließlich ist es gemäß Anspruch 9 vorteilhaft, wenn die Nut asymmetrisch zur Drehachse des Ventilkörpers vorgesehen ist. Auf diese Weise kann die Nut beim Verdrehen des Ventilkörpers in unterschiedliche Lagen relativ zu den Anschlüssen gebracht werden. Damit kann eine besonders feinfühlige Beeinflussung des Fluidstroms bewirkt werden.

Der Erfindungsgegenstand wird beispielhaft anhand der Zeichnung erläutert, ohne den Schutzumfang zu begrenzen.

Es zeigt:
- Figur 1: eine teilweise geschnittene, räumliche Explosionsdarstellung eines Fluidventils,
- Figur 2: eine Schnittdarstellung durch das Fluidventil gemäß Figur 1 entlang der Schnittlinie II-II,
- Figur 3: eine Schnittdarstellung durch das Fluidventil gemäß Figur 1 und
- Figur 4: eine Schnittdarstellung gemäß Figur 2 einer alternativen Ausführungsform des Fluidventils.

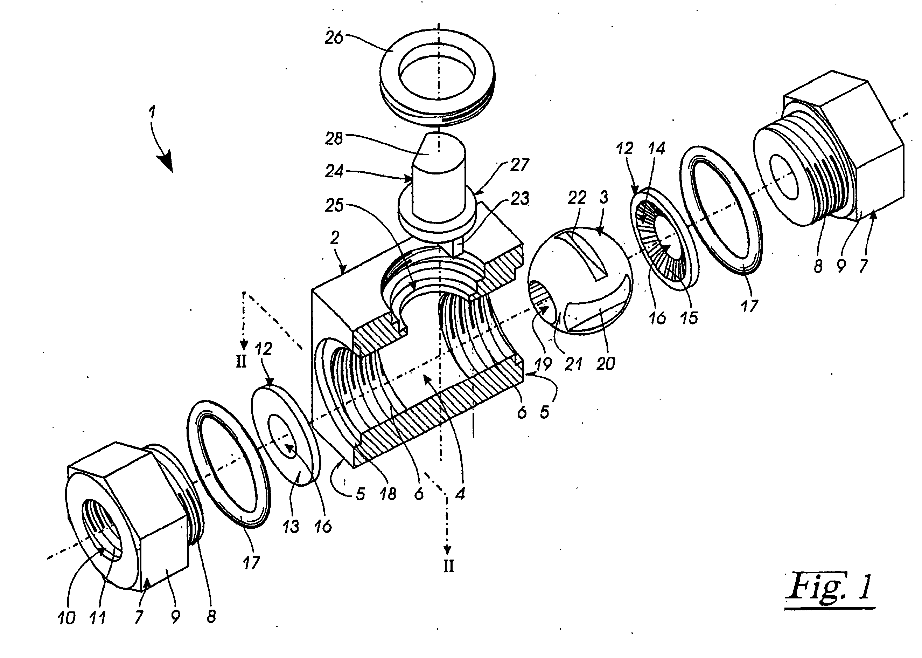

Figur 1 zeigt eine Explosionsdarstellung eines Fluidventils 1. Dieses besteht im wesentlichen aus einem geschnitten dargestellten Ventilgehäuse 2 und einem Ventilkörper 3.

Das Ventilgehäuse 2 weist eine Durchgangsbohrung 4 auf, in der der kugelförmige Ventilkörper 3 mittig gehalten ist. An beiden Endbereichen 5 ist diese Durchgangsbohrung 4 mit jeweils einem Gewinde 6 versehen, das zur Aufnahme von jeweils einem Anschluß 7 dient. Der Anschluß 7 weist einen Gewindeschaft 8 auf, der passend zum Gewinde 6 der Durchgangsbohrung 4 des Ventilgehäuses 2 ausgebildet ist. Auf diese Weise läßt sich der Anschluß 7 im Ventilgehäuse 2 festlegen. Der Anschluß 7 weist außerdem einen Schraubenkopf 9 auf, der zum einfachen Erfassen mit einem Gabelschlüssel sechskantförmig geformt ist. Im Anschluß 7 ist schließlich eine zentrale Bohrung 10 vorgesehen, die mit einem Innengewinde 11 zur Aufnahme einer Schlauchverbindung ausgerüstet ist.

Zwischen den Anschlüssen 7 und dem Ventilkörper 3 ist jeweils ein Ventilsitz 12 vorgesehen, die durch Festziehen der Anschlüsse 7 gegen den Ventilkörper 3 gedrückt werden. Der Ventilsitz 12 besteht aus einer Scheibe, aus einem selbstschmierenden Kunststoff wie beispielsweise Polytetraflurethylen. Eine dem Anschluß 7 zugewandte Fläche 13 ist eben ausgebildet und liegt flach stirnseitig auf dem Gewindeschaft 8 auf. Eine gegenüberliegende Dichtfläche 14 ist dagegen teilhohlkugelförmig ausgebildet und an die Kugelform des Ventilkörpers 3 angepaßt. In dieser Dichtfläche 14 sind radiale Rillen 15 vorgesehen, die eine definierte Leckrate des Ventilsitzes 12 einstellen. Außerdem weist der Ventilsitz 12 eine zentrale Öffnung 16 auf, die vom Fluid durchströmt werden kann. Zur Abdichtung der Anschlüsse 7 gegenüber dem Ventilgehäuse 2 ist außerdem ein Dichtring 17 in Form eines O-Rings vorgesehen, der in einen Absatz 18 des Ventilgehäuses 2 eingreift.

Der Ventilkörper 3 ist im wesentlichen kugelförmig ausgebildet und weist eine Durchgangsbohrung 19 auf, welche in der in Figur 1 dargestellten Durchgangsstellung mit den Öffnungen 16 der Ventilsitze 12 zur Deckung kommt. In dieser Stellung ist der maximale Fluiddurchfluß durch das Fluidventil 1 gewährleistet. Parallel zur Durchgangsbohrung 19 weist der Ventilkörper 3 zwei Nuten 20 auf, die im Abstand zur Durchgangsbohrung 19 vorgesehen sind. Diese Nuten 20 sorgen auch in einem Stellwinkelbereich des Ventilkörpers 3, in dem die Durchgangsbohrung 19 verschlossen ist, für einen geringen Fluidstrom durch das Fluidventil 1. Dabei ist es wichtig, daß zwischen der Nut 20 und der Durchgangsbohrung 19 noch eine unversehrte Dichtungsfläche 21 verbleibt. Andernfalls könnte der Ventilkörper 3 das Fluidventil 3 nicht vollständig verschließen.

Im Ventilkörper 3 ist außerdem eine Stellnut 22 vorgesehen, in die ein Betätigungsglied 23 eines Schaftes 24 eingreift. Durch Verdrehen des Schaftes 24 läßt sich damit der Ventilkörper 3 beliebig innerhalb des Ventilgehäuses 2 verdrehen, um die durch das Fluidventil 1 strömende Fluidmenge einstellen zu können.

Um den Schaft 24 im Ventilgehäuse 2 zu halten, weist dieses eine Bohrung 25 auf, die senkrecht zur Durchgangsbohrung 4 ausgerichtet ist. Die Bohrung 25 ist ventilinnenseitig stufig nach innen gezogen. Ventilaußenseitig ist ein Gewindering 26 in das Ventilgehäuse 2 eingeschraubt, dessen Innendurchmesser ebenfalls kleiner als der Durchmesser der Bohrung 25 ist. In montierter Lage des Gewinderings 26 ergibt sich damit eine Bohrung, die in beiden Endbereichen verjüngt ist. In dieser Bohrung ist ein scheibenförmiger Abschnitt 27 des Schaftes 24 drehbar aufgenommen. Außerdem ist in der Bohrung 25 ein weiterer Dichtring vorgesehen, der zur besseren Übersichtlichkeit der Darstellung weggelassen ist. Der Schaft 24 weist schließlich eine außenseitige Stellwelle 28 auf, die zum Angriff von nicht dargestellten Stellhebeln dient, mit deren Hilfe der Ventilkörper 3 verdreht werden kann.

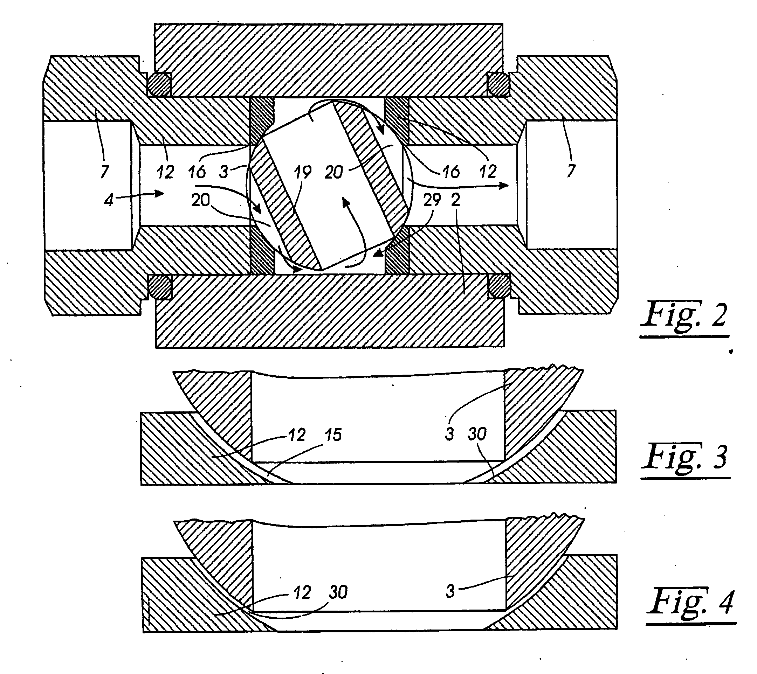

Die Funktion des Fluidventils 1 wird anhand der Schnittdarstellung gemäß Figur 2 näher erläutert. Der Schnitt erfolgt dabei entlang der Schnittlinie II-II gemäß Figur 1, so daß das Fluidventil 1 in Richtung der Achse des Schaftes 24 betrachtet wird. In der in Figur 2 dargestellten Lage ist der Ventilkörper 3 so weit verdreht, daß die Durchgangsbohrung 4 des Ventilkörpers 3 vollständig verschlossen ist. In dieser Lage kann das Fluid beispielsweise vom linken Anschluß 7 eintreten und die Öffnung 16 des Ventilsitzes 12 durchdringen. Das Fluid strömt dann durch die untere Nut 20 in einen Ventilraum 29, der innenseitig vom Ventilkörper 3 und außenseitig vom Ventilgehäuse 2 begrenzt ist. Das Fluid umströmt nun den Ventilkörper 3 und gelangt auf diese Weise in die obere Nut 20. Von dieser gelangt es in die Öffnung 16 des rechten Ventilsitzes 12 und damit in den rechten Anschluß 7.

Durch weiteres Verdrehen des Ventilkörpers 3 können die Nuten 20, abgesehen von der gewollten Leckrate der Ventilsitze 12, vollständig verschlossen werden. Durch Wahl der Nutentiefe kann der Winkelbereich des Schaftes 24, in dem das Fluidventil 1 schließt, in weiten Grenzen eingestellt werden.

Figur 3 zeigt eine vergrößerte Schnittdarstellung des Fluidventils 1 gemäß Figur 2. Aus dieser Schnittdarstellung ist die Wirkung der Rillen 15 zu erkennen, die Spalten 30 zwischen dem Ventilsitz 12 und dem Ventilkörper 3 bilden. Auf diese Weise ist sichergestellt, daß auch bei vollständig geschlossenem Ventilkörper 3 eine geringe Fluidmenge im wesentlichen drucklos durch das Fluidventil 1 fließen kann.

Figur 4 zeigt eine alternative Ausführungsform des Fluidventils 1 gemäß Figur 3, wobei gleiche Bezugszeichen gleiche Teile benennen. Anstatt der Rillen 15 ist dabei der Ventilsitz 12 derart ausgebildet, daß er zum Ventilkörper 3 hin einen Spalt 30 bildet. Dieser Spalt 30 ist dabei auf wenige Hundertstel Millimeter dimensioniert. Dieser reicht aus, um eine geringe Fluidmenge durch das geschlossene Fluidventil 1 strömen zu lassen. Aufgrund der großen Strömungsreibung in dem kleinen Spalt 30 wird der Fluiddruck in diesem Spalt 30 praktisch vollständig abgebaut.

### Bezugszeichenliste

- 1: Fluidventil
- 2: Ventilgehäuse
- 3: Ventilkörper
- 4: Durchgangsbohrung
- 5: Endbereich
- 6: Gewinde
- 7: Anschluß
- 8: Gewindeschaft
- 9: Schraubenkopf
- 10: Bohrung
- 11: Innengewinde
- 12: Ventilsitz
- 13: Fläche
- 14: Dichtfläche
- 15: Rille
- 16: Öffnung
- 17: Dichtring
- 18: Absatz
- 19: Durchgangsbohrung
- 20: Nut
- 21: Dichtungsfläche
- 22: Stellnut
- 23: Betätigungsglied
- 24: Schaft
- 25: Bohrung
- 26: Gewindering
- 27: scheibenförmiger Abschnitt
- 28: Stellwelle
- 29: Ventilraum
- 30: Spalt

## Patentansprüche

1. Fluidventil bestehend aus einem Ventilgehäuse (2) und mindestens einem darin drehbar gelagerten Ventilkörper (3), wobei im Ventilgehäuse (2) mindestens zwei Anschlüsse (7) für ein Fluid vorgesehen sind, welche in einem vorgesehenen Stellwinkelbereich des Ventilkörpers durch eine darin vorgesehene Durchgangsbohrung (19) kommunizieren, wobei der Durchgangsbohrung (19) mindestens eine Nut (20) im Ventilkörper (3) zugeordnet ist, welche in einem erweiterten Stellwinkelbereich eine Verbindung zwischen den Anschlüssen (7) herstellt, **dadurch gekennzeichnet, daß** zwischen der mindestens einen Nut (20) und der Durchgangsbohrung (19) eine Dichtungsfläche (21) des Ventilkörpers (3) vorgesehen ist und daß die mindestens eine Nut (20) in etwa parallel zur Durchgangsbohrung (19) und im Abstand zu dieser verläuft.

2. Fluidventil nach Anspruch 1, **dadurch gekennzeichnet, daß** die Nuten (20) einen kleineren Querschnitt als Durchgangsbohrung (19) aufweisen.

3. Fluidventil nach Anspruch 1 oder 2, **dadurch gekennzeichnet, daß** sich die Stellwinkelbereiche, in denen die Anschlüsse (7) einerseits über die Durchgangsbohrung (19) und andererseits über die Nuten (20) kommunizieren, überlappen.

4. Fluidventil nach mindestens einem der Ansprüche 1 bis 3, **dadurch gekennzeichnet, daß** die Nuten (20) einander gegenüberliegen.

5. Fluidventil nach mindestens einem der Ansprüche 1 bis 4, **dadurch gekennzeichnet, daß** das Ventilgehäuse (2)Ventilsitze (12) aufweist, an denen der Ventilkörper (3) mit Spalt (30) anliegt, um eine Leckrate des geschlossenen Fluidventils (1) einzustellen.

6. Fluidventil nach Anspruch 5, **dadurch gekennzeichnet, daß** der Ventilsitz (12) radiale Rillen (15) aufweist, die einen Spalt (30) bilden.

7. Fluidventil nach Anspruch 5 oder 6, **dadurch gekennzeichnet, daß** der Ventilsitz (12) von einer Dichtscheibe gebildet ist, die von einer den Anschluß (7) bildenden Schraube (8) gegen den Ventilkörper (3) gedrückt ist.

8. Fluidventil nach Anspruch 7, **dadurch gekennzeichnet, daß** die Schraube (8) mit einer Dichtfläche einen Dichtring (17) gegen das Ventilgehäuse (2) preßt.

9. Fluidventil nach mindestens einem der Ansprüche 1 bis 8, **dadurch gekennzeichnet, daß** die Nut (20) asymmetrisch zur Drehachse des Ventilkörpers (3) vorgesehen ist.

## Claims

1. Fluid valve consisting of a valve housing (2) and at least one valve body (3) mounted rotatably therein, at least two ports (7) for a fluid being provided in the valve housing (2), which ports (7) communicate over a specified setting angle range of the valve body through a through-hole (19) provided therein, at least one groove (20) in the valve body (3) being associated with the through-hole (19), which groove (20) brings about a connection between the ports (7) over an enlarged setting angle range, **characterized in that** a sealing surface (21) of the valve body (3) is provided between the at least one groove (20) and the through-hole (19), and **in that** the at least one groove (20) extends approximately parallel to the through-hole (19) and at a distance therefrom.

2. Fluid valve according to Claim 1, **characterized in that** the grooves (20) have a smaller cross-section than the through-hole (19).

3. Fluid valve according to Claim 1 or 2, **characterized in that** the setting angle ranges over which the ports (7) communicate, on the one hand via the through-hole (19) and on the other hand via the grooves (20), overlap.

4. Fluid valve according to at least one of Claims 1 to 3, **characterized in that** the grooves (20) lie opposite one another.

5. Fluid valve according to at least one of Claims 1 to 4, **characterized in that** the valve housing (2) comprises valve seats (12), against which the valve body (3) rests with a gap (30), in order to adjust a leakage rate of the closed fluid valve (1).

6. Fluid valve according to Claim 5, **characterized in that** the valve seat (12) comprises radial fluting (15), which forms a gap (30).

7. Fluid valve according to Claim 5 or 6, **characterized in that** the valve seat (12) takes the form of a sealing disc, which is pressed by a screw (8) forming the port (7) against the valve body (3).

8. Fluid valve according to Claim 7, **characterized in that**, with a sealing surface, the screw (8) presses a sealing ring (17) against the valve housing (2).

9. Fluid valve according to at least one of Claims 1 to 8, **characterized in that** the groove (20) is disposed asymmetrically to the axis of rotation of the valve body (3).

## Revendications

1. Valve pour fluide, se composant d'un boîtier de valve (2) et d'au moins un corps de valve (3) pouvant tourner à l'intérieur de celui-ci, dans laquelle il est prévu dans le boîtier de valve (2) au moins deux raccords (7) pour un fluide, qui communiquent par un alésage de passage (19) prévu dans le corps de valve dans une plage prévue d'angles de réglage du corps de valve, dans laquelle l'alésage de passage (19) est associé à au moins une rainure (20) dans le corps de valve (3), qui établit une communication entre les raccords (7) dans une plage élargie d'angles de réglage, **caractérisée en ce qu'**il est prévu, entre ladite au moins une rainure (20) et l'alésage de passage (19), une surface d'étanchéité (21) du corps de valve (3), et **en ce que** ladite au moins une rainure (20) s'étend sensiblement parallèlement à l'alésage de passage (19) et à distance de celui-ci.

2. Valve pour fluide selon la revendication 1, **caractérisée en ce que** les rainures (20) présentent une section transversale plus petite que l'alésage de passage (19).

3. Valve pour fluide selon la revendication 1 ou 2, **caractérisée en ce que** les plages d'angles de réglage, dans lesquelles les raccords (7) communiquent d'une part par l'alésage de passage (19) et d'autre part par les rainures (20), se chevauchent.

4. Valve pour fluide selon au moins une des revendications 1 à 3, **caractérisée en ce que** les rainures (20) sont opposées l'une à l'autre.

5. Valve pour fluide selon au moins une des revendications 1 à 4, **caractérisée en ce que** le boîtier de valve (2) présente des sièges de valve (12), sur lesquels le corps de valve (3) s'applique avec une fente (30), afin de régler un débit de fuite de la valve pour fluide (1) fermée.

6. Valve pour fluide selon la revendication 5, **caractérisée en ce que** le siège de valve (12) présente des rainures radiales (15), qui forment une fente (30).

7. Valve pour fluide selon la revendication 5 ou 6, **caractérisée en ce que** le siège de valve (12) est formé par une rondelle d'étanchéité, qui est pressée contre le corps de valve (3) par une vis (8) formant un des raccords (7).

8. Valve pour fluide selon la revendication 7, **caractérisée en ce que** la vis (8) presse avec une surface d'étanchéité un joint torique (17) contre le boîtier de valve (2).

9. Valve pour fluide selon au moins une des revendications 1 à 8, **caractérisée en ce que** la rainure (20) est asymétrique par rapport à l'axe de rotation du corps de valve (3).
